Europäisches Patentamt

European Patent Office

Office européen des brevets

(19)

(11) Veröffentlichungsnummer: **0 160 748**
**B1**

(12) **EUROPÄISCHE PATENTSCHRIFT**

(45) Veröffentlichungstag der Patentschrift:
13.07.88

(21) Anmeldenummer: **84115563.3**

(22) Anmeldetag: **17.12.84**

(51) Int. Cl.⁴: **H 04 L 1/24**, H 04 B 17/02, H 04 L 25/49

(54) **Codefehlereinblendung in digitale übertragungssignale.**

(30) Priorität: **08.05.84 DE 3416953**

(43) Veröffentlichungstag der Anmeldung:
**13.11.85 Patentblatt 85/46**

(45) Bekanntmachung des Hinweises auf die Patenterteilung:
**13.07.88 Patentblatt 88/28**

(84) Benannte Vertragsstaaten:
**AT BE CH DE FR GB IT LI NL SE**

(56) Entgegenhaltungen:
**EP - A - 0 045 680**

(73) Patentinhaber: **Siemens Aktiengesellschaft Berlin und München, Wittelsbacherplatz 2, D-8000 München 2 (DE)**

(72) Erfinder: **Burgmeier, Jürgen, Dipl.-Ing., Flossmannstrasse 2a, D-8000 München 60 (DE)**
Erfinder: **Dömer, Josef, Dipl.-Ing., Flossgatter 18, D-8021 Hohenschäftlarn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Codeumsetzer entsprechend dem Oberbegriff der Ansprüche 1 und 2.

Aus der DE-AS 3 004 767 ist es bei Übertragungsstrecken für digitale Signale bekannt, in den Endstellen und ggf. auch in den Zwischenregeneratoren eine Überwachung des zu übertragenden digitalen Signales auf ein bestimmtes Überwachungskriterium, beispielsweise die Synchroninformation der digitalen Signale oder die Coderegel, beispielsweise über die laufende digitale Summe, vorzunehmen. Wegen der geringen Fehlerrate von Übertragungsstrecken für digitale Signale, die beispielsweise unter $10^{-10}$ Fehler pro Bit sein kann, und wegen der Möglichkeit, daß auftretende Fehler nicht zu Coderegelverletzungen führen, werden von einer Endstelle in die zu übertragenden digitalen Signale in bestimmtem Umfang Fehler eingeblendet, durch die das Überwachungskriterium gezielt verfälscht wird. Wegen der niedrigen Fehlerrate in digitalen Übertragungssystemen ist es dabei möglich, gut feststellbare Codefehler in die zu übertragenden digitalen Signale einzufügen, ohne daß eine wesentliche Verfälschung des Informationsinhalts dieser Signale auftritt. Für Anwendungsfälle, bei denen eine deutlich höhere Fehlerrate eingeblendet werden soll, ist das bekannte Verfahren also nicht geeignet. Derartige Möglichkeiten sind z.B. erwünscht bei digitalen Übertragungsstrecken, bei denen durch die Verwendung von Verwürflern und Alphabetcodierern Möglichkeiten der Fehlervervielfachung gegeben sind.

Aus der DE-PS 2 944 377 ist ein an eine digitale Schnittstelle DS angeschlossenes Leitungsendgerät bekannt, das im Anschluß an die digitale Schnittstelle die Reihenschaltung eines Empfangsinterfaces EI, eines sendeseitigen Codeumsetzers CUS und eines Sendeverstärkers aufweist, an den sich eine Leitungsschnittstelle LS anschließt. Empfangsgegenseitig enthält das Leitungsendgerät im Anschluß an die Leitungsschnittstelle LS einen Empfangsverstärker EV, einen empfangsseitigen Codeumsetzer CUE und schließlich das Sendeinterface SI, an das sich wiederum die digitale Schnittstelle DS anschließt. Das amtsseitige Schnittstellensignal wird im Empfangsinterface EI in ein Binärsignal umgewandelt, im sendeseitigen Codeumsetzer in einen Alphabetcode, beispielsweise entsprechend einer 5 B/6B-Umsetzung oder einer 4B/3T-Umsetzung umgeformt und im Sendeverstärker auf die richtige Impulsform beim gewünschten Pegel eingestellt. Die für die Umsetzung verwendeten Codetabellen weisen dabei mehrere Moden auf, es ist also möglich, entsprechend der Vorgeschichte einem Primärwert einen von mehreren sekundären Werten zuzuordnen, die Sekundärwerte können dabei je nach Mode unterschiedlich sein, gleiche Sekundärwerte bei verschiedenen Moden sind dabei aber immer ein- und demselben Primärwert zugeordnet. Die Tabelle eines derartigen Codes ist in der DE-A-3 117 221 dargestellt.

Empfangsseitig enthält das Leitungsendgerät nach der DE-PS 2 944 377 einen Empfangsverstärker EV, bei dem es sich um einen Regenerator für die digitalen Signale handeln kann, die über Kupferstrecken übertragen werden; es kann sich auch um einen Fotoverstärker handeln, falls sich an die Leitungsschnittstelle eine über Lichtwellenleiter übertragene Strecke anschließt. Im empfangsseitigen Codeumsetzer CUE erfolgt die Rückumwandlung vom Alphabetcode in ein Binärsignal, das im Sendeinterface SI in den Schnittstellencode umgeformt und mit dem vorgeschriebenen Pegel an die digitale Schnittstelle DS abgegeben wird. In diesem Umfange entspricht die Fig. 1 der vorliegenden Patentanmeldung der Fig. 1, der die DE-PS 2 944 377.

Aus der EP-A-0 045 680 ist ein Verfahren bekannt, bei dem digitale Übertragungssignale vor der Übertragung über eine digitale Strecke von einem binären Code in einen redundanten ternären Alphabetcode mit mehreren Moden umgeformt werden. In Abhängigkeit vom logischen Zustand eines zusätzlich zu übertragenden Dienstkanals wird dabei ein gegenüber dem vorgesehenen Modenzustand veränderter Modenzustand verwendet, so daß im Übertragungssignal Codefehler entstehen. Empfangsseitig können diese Codefehler erkannt und daraus auf dem logischen Zustand des zusätzlich übertragenen Dienstkanals geschlossen werden. Die Umcodierung erfolgt mittels eines Codeumsetzers, der mittels Speicherglieder (ROM) aufgebaut ist und einen nachgeschalteten Addierer zur Ermittlung der laufenden digitalen Summe und damit des vorgesehenen Modenzustandes und diesem nachgeschaltete D-Flip-Flops als Modenspeicher enthält. Durch die Verwendung zweier zueinander synchron arbeitender Festwertspeicher (ROM) ist der bekannte Codeumsetzer bei hohen Übertragungsgeschwindigkeiten schwierig realisierbar, fehleranfällig und vergleichsweise aufwendig.

Die Aufgabe bei der vorliegenden Erfindung besteht nun darin, einen Codeumsetzer der eingangs erwähnten Art so weiterzubilden, daß dieser bei vergleichsweise geringem zusätzlichen Aufwand für sehr hohe Übertragungsgeschwindigkeiten geeignet ist und wenig zusätzliche Fehler erzeugt.

Erfindungsgemäß wird die Aufgabe durch Codeumsetzer entsprechend den kennzeichnenden Merkmalen der Patentansprüche 1 oder 2 gelöst.

Die Erfindung soll im folgenden anhand der Zeichnung näher erläutert werden. Dabei zeigt

Fig. 1 das Blockschaltbild eines Leitungsendgerätes einer digitalen Übertragungsstrecke,

Fig. 2 das Blockschaltbild eines sendeseitigen Codeumsetzers,

Fig. 3 einen Teil des sendeseitigen Codeumsetzers mit einem einfachen Modenspeicher,

Fig. 4 ein Impulsdiagramm zur Fig. 3,

Fig. 5 einen Teil des sendeseitigen Codeumsetzers mit einem aufwendigeren Modenspeicher für eine 5B/6B-Codierung,

Fig. 6 ein Impulsdiagramm zur Fig. 5,

Fig. 7 einen Teil des sendeseitigen Codeumsetzers mit einem weiteren aufwendigen Modenspeicher für eine 5B/6B-Codierung und

Fig. 8 ein Impulsdiagramm zur Fig. 7.

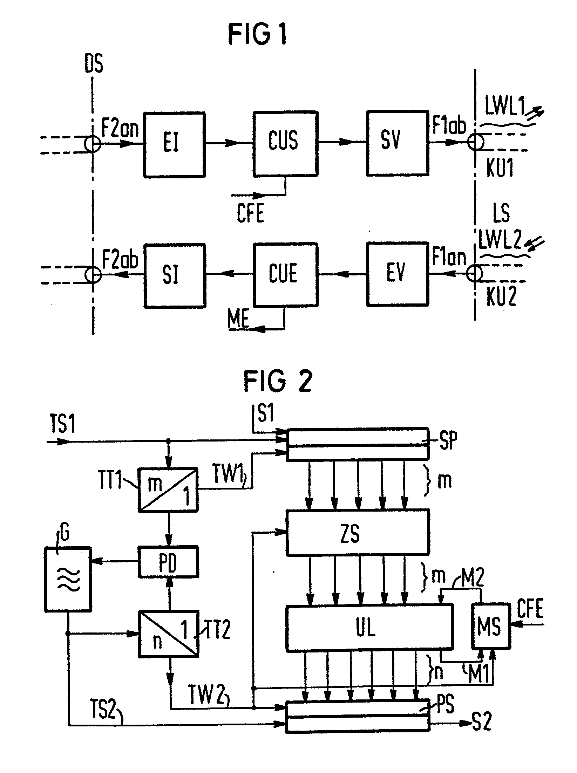

Die Fig. 1 entspricht bis auf die zusätzlichen Anschlüsse CFE für ein Signal zur Codefehlereinblendung am sendeseitigen Codeumsetzer und ME für einen Monitoreingang, der am empfangsseitigen Codeumsetzer CUE angeschlossen ist, dem bereits beschriebenen Stand der Technik. An die Leitungsschnittstelle LS können dabei je nach Anwendungsfall eine abgehende und eine ankommende Lichtwellenleiterübertragungsstrecke LWL 1, LWL 2 oder eine abgehende und eine ankommende Kupferleitungsstrecke KU 1, KU 2 angeschlossen sein.

Das in der Fig. 2 dargestellte Blockschaltbild zeigt einen Codeumsetzer, der als sendeseitiger Codeumsetzer CUS in das Leitungsgerät nach der Fig. 1 einsetzbar ist. Bis auf den Modenspeicher MS und die entsprechenden Anschlüsse entspricht der Codeumsetzer dabei dem Stand der Technik, wie er in der DE-PS 2 944 377, Spalte 4, ab Zeile 38 beschrieben ist. Zur wortweisen Umformung der ankommenden Signale S1 werden diese in einem ersten Serien-Parallel-Wandler SP 1 parallelisiert und unter dem Einfluß eines ersten Worttaktes TW1, der durch einen Taktteiler TT1 aus dem Bittakt gewonnen wurde, an einen Zwischenspeicher ZS abgegeben. Der Codeumsetzer enthält eine Phasenregelschleife mit einem empfangsseitigen Generator G, der auf der Bittaktfrequenz der abgehenden Signale schwingt, wobei mittels eines zweiten Frequenzteilers TT2 aus diesem Bittakt der zweite Worttakt TW2 erzeugt und an den Zwischenspeicher ZS sowie an einen Phasendikriminator PD abgegeben wird. Dieser Phasendikriminator erhält auch den ersten Worttakt TW1 vom ersten Taktteiler TT1. Da die Worttakte frequenzmäßig gleich sind, ist ein Phasenvergleich möglich, das Ergebnis des Phasenvergleichs dient zur Steuerung des Generators G. Der zweite Worttakt TW2 ist ebenso wie der zweite Bittakt TS2 praktisch jitterfrei, so daß die im Zwischenspeicher ZS abgespeicherten Signalwerte jitterfrei ausgelesen und an die Umcodierlogik UL abgegeben werden. Bei der Umcodierlogik handelt es sich um einen Festwertspeicher ROM mit zusätzlicher Modenerkennung, der auf ein ankommendes 5-Bit-Wort hin das zugeordnete 6-Bit-Wort an den Parallel-Serienwandler PS abgibt, von dem das Ausgangssignal S2 an den nachgeschalteten Sendeverstärker SV abgegeben wird. Durch den Codeumsetzer nach der Fig. 2 wird aus einem Codewort mit m Bits ein Codewort mit n Bits erzeugt, das außerdem vergleichsweise jitterfrei ist.

Entsprechend der Erfindung enthält die Fig. 2 zusätzlich einen Modenspeicher MS, der mit dem zweiten Worttakt TW2 synchronisiert ist und über einen Steuereingang CFE verfügt, an den zur Codefehlereinblendung in die abgehenden Signale Impulse angelegt werden können. Der Modenspeicher MS ist über seinen Ausgang mit einem zugeordneten Eingang der Umcodierlogik UL verbunden und gibt an deren Modeneingang M1 ein den Folgemode betreffendes Signal ab, das die Umcodierlogik bei Codefehlereinblendungen in einen «falschen» Modenzustand schaltet, oder aber das Umschalten in den nächsten «richtigen» Modenzustand verhindert. Entsprechend dem vom Zwischenspeicher ZS übernommenen Codewort und dem Modenzustand wird von der Umcodierlogik ein Ausgangswort erzeugt und der folgende Modenzustand über den Modenausgang M2 an einen angeschlossenen Eingang des Modenspeichers MS abgegeben. Die Umcodierung mit einer entsprechenden Codetabelle ist dabei aus der De-OS 3 117 221 bekannt. Als Ausgangscodewort bei der Codefehlereinblendung ergibt sich dann nicht das entsprechend der Codetabelle vorgesehene Codewort, sondern ein Codewort, das dem falschen Folgemode entspricht. Wird z.B. ein 5-Bit-Wort der Form 00010 eingegeben, dann sind bei positivem Folgemode das Ausgangswort 110110 und bei negativen Folgemode das Codewort 100010 möglich. Beide Ausgangsworte tauchen in der Codetabelle nur in der Zuordnung zum Eingangswort 00010 auf. Wird nun anstelle des richtigen positiven Modes das Codewort entsprechend dem negativen Mode ausgegeben, dann ist dies empfangsseitig als Codefehler erkennbar, es ist aber eine eindeutige Zuordnung zum 5-Bit-Wort 00010 möglich, so daß die Einblendung und Übertragung eines Codefehlers nicht zu einer Verfälschung der übertragenen Information geführt hat.

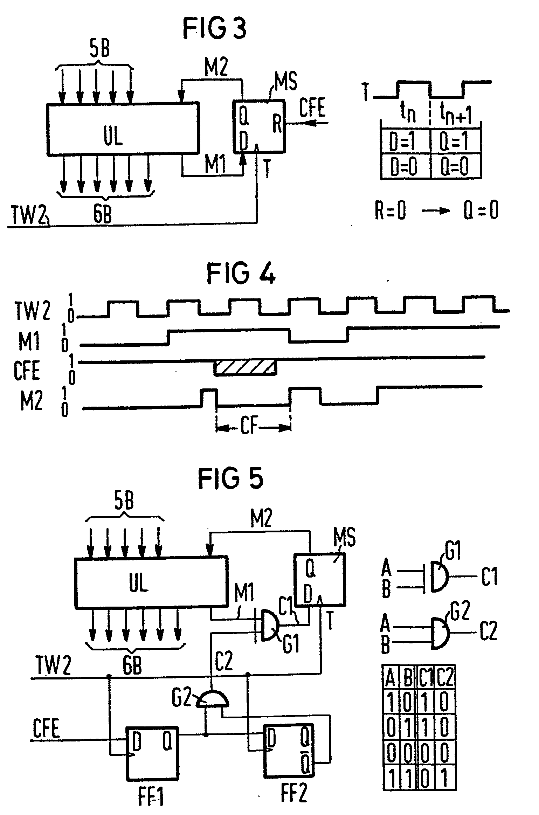

In der Fig. 3 ist die Umcodierlogik im Zusammenwirken mit einem D-Flip-Flop dargestellt, das als Modenspeicher MS dient. Die Umcodierlogik UL dient zur Umcodierung eines 5-Bit-Wortes in ein 6-Bit-Wort, das als Modenspeicher MS verwendete D-Flip-Flop ist mit seinem D-Eingang an den Modenausgang M1 der Umcodierlogik UL angeschlossen, der Q-Ausgang des Flip-Flops ist mit dem Modeneingang M2 der Umcodierlogik UL verbunden. Das D-Flip-Flop ist mit dem Worttakt TW2 der 6-Bit-Worte getaktet und enthält außerdem einen Rücksetzeingang R, der mit dem Eingang zur Codefehlereinblendung CFE verbunden ist. Wird beispielsweise von der Umcodierlogik UL ein positives Ausgangssignal zur Signalisierung des positiven Modenzustandes an den D-Eingang gegeben, dann geht der entsprechende Q-Ausgang des D-Flip-Flops ebenfalls auf den Wert logisch 1 und gibt diesen an den Modeneingang M2 der Umcodierlogik weiter. Ein Impuls zur Codefehlereinblendung am Rücksatzeingang R des D-Flip-Flops setzt dieses auf Null, so daß dann dessen Q-Ausgang ebenfalls auf Null gesetzt wird und statt des positiven Modenzustandes nunmehr der negative Modenzustand an den Modeneingang M2 gelangt.

In der Fig. 4 ist in einem Impulsdiagramm zur Fig. 3 die Codefehlereinblendung weiter erläutert. Es sind untereinander der Worttakt TW2 für die zu erzeugenden 6-Bit-Worte, der Modenzustand am Modenausgang M1 der Umcodierlogik, ein Rücksatzimpuls am Eingang zur Codefehlereinblendung und der logische Zustand am Modeneingang M2 der Umcodierlogik dargestellt. Da nicht mit jedem 6-Bit-Wort der Modenzustand wechselt, sind die M1-Impulse vergleichsweise längerdauernd als die Impulse des zweiten Worttaktsignals TW2.

Im vorliegenden Falle wurde angenommen, daß mit dem zweiten Worttaktimpuls der Modenzustand am Modenausgang der Umcodierlogik von Null auf Eins wechselt und für zwei Worttaktperioden verbleibt. Mit dem Ende des zweiten Worttaktimpulses wird das D-Flip-Flop umgeschaltet, so daß an dessen Q-Ausgang ebenfalls der logische «1»-Pegel erscheint. Wird, wie im Ausführungsbeispiel angedeutet, eine bestimmte Zeit danach über einen Impuls am Rücksetzeingang R das D-Flip-Flop zurückgesetzt, dann geht der logische Zustand am Q-Ausgang wieder auf Null zurück, so daß in diesem Falle der Modenzustand am Modeneingang M2 der Umcodierlogik UL gestört ist und damit ein Codefehler, aber kein Bitfehler erzeugt wird. Über die Anzahl der Steuerimpulse am Rücksetzeingang des zweiten Speichers MS kann dabei die Codefehlerhäufigkeit gewählt werden. Zweckmäßig ist es zum Beispiel, eine Codefehlerhäufigkeit von etwa $10^{-5}$ einzustellen, die zwischen den beiden Grenzen für den dringenden Alarm entsprechend einer Fehlerhäufigkeit von $10^{-3}$ und dem nichtdringenden Alarm entsprechend einer Fehlerhäufigkeit von $10^{-4}$ liegt. Die Einstellung einer Fehlerrate von $10^{-5}$ wird dann im empfangenden Leitungsendgerät als nichtdringender (B) Alarm erkannt.

Eine aufwendigere Art der Codefehlereinblendung ist in der Anordnung nach der Fig. 5 gegeben, bei der bei jedem positiven Modenwechsel ein Codefehler erzeugt wird.

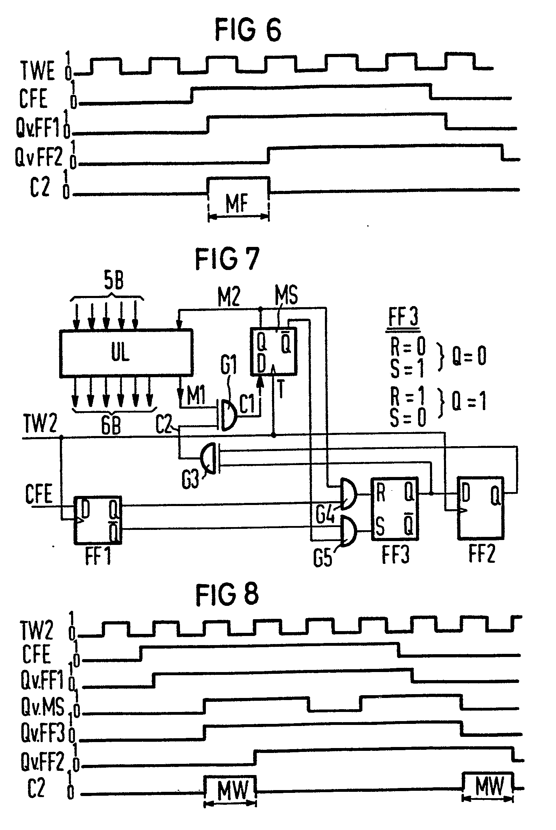

In der Fig. 5 ist in die Verbindung von Modenausgang M1 der Umcodierlogik zum D-Eingang des Modenspeichers MS ein erstes Gatter G1 eingeschaltet. Entsprechend der Logiktabelle handelt es sich um Exklusiv-ODER-Gatter, dessen einer Eingang mit dem Modenausgang M1 und dessen anderer Eingang mit dem Ausgang eines zweiten Gatters G2 vom UND-Typ verbunden ist. Der Modenspeicher ist wie im Falle der Fig. 3 mit dem zweiten Worttakt TW2 getaktet, der Eingang CFE für die Impulse, die die Codefehlereinblendung auslösen, ist aber nicht mehr mit dem Modenspeicher, sondern mit dem D-Eingang eines ersten D-Flip-Flops FF1 verbunden. Dieses Flip-Flop wird ebenfalls mit dem zweiten Worttakt TW2 getaktet, es wirkt als Speicher für die Impulse zur Codefehlereinblendung und gibt diese über seinen Q-Ausgang an den ersten Eingang des zweiten Gatters G2 und an den D-Eingang eines zweiten D-Flip-Flops FF2 ab. Der invertierende Ausgang $\bar{Q}$ dieses zweiten D-Flip-Flops FF2 ist mit dem zweiten Eingang des zweiten Gatters G2 verbunden. Auch das zweite D-Flip-Flop FF2 wird mit dem zweiten Worttakt TW2 getaktet, das Verhalten der Schaltungsanordnung ist in Abhängigkeit von den Eingangssignalen in der Fig. 6 dargestellt. In der Fig. 6 ist unter dem zweiten Worttakt TW2 ein mehrere Worttaktperioden andauernder Impuls zur Codefehlereinblendung dargestellt, dessen logischer Pegel mit der nächsten ansteigenden Taktflanke am Ausgang Q des Flip-Flops FF1 und mit der zweiten ansteigenden Taktflanke am Ausgang Q des zweiten D-Flip-Flops FF2 erscheint. Vom Gatter G2 werden die Ausgangssignale des nichtinvertierenden Ausgangs Q des ersten D-Flip-Flops FF1 und des invertierenden Ausganges $\bar{Q}$ des zweiten D-Flip-Flops FF2 zusammengefaßt, so daß mit dem Erscheinen der logischen 1 am nichtinvertierenden Ausgang des ersten D-Flip-Flops FF1 ein 1-Impuls am Ausgang C2 des zweiten Gatters G2 erscheint, der bis zum Beginn der zweiten Taktflanke nach dem Auftreten des Impulses zur Codefehlereinblendung CFE andauert. Dies ergibt sich daraus, daß als Ergebnis der beiden 1-Impulse an den Eingängen des ersten Gatters G1 dieses einen Null-Impuls an den Modenspeicher abgibt und dadurch für eine Worttaktperiode den Modenzustand verändert. Es ergibt sich also pro positivem Impulswechsel ein Codefehler, sofern die Länge des Steuerimpulses größer als eine Taktwortperiode ist. Die Verletzung der laufenden digitalen Summe, die als Coderegelverletzung überwacht wird, in positiver oder negativer Richtung erfolgt statistisch, je nach dem Zustand am Modenausgang M1 der Umcodierlogik UL während der gestörten Worttaktperiode, da dieser Zustand negiert wird.

Gegenüber der Anordnung nach der Fig. 5 ist bei der Anordnung nach der Fig. 7 die «Ausbeute» an Codefehlern größer, da bei jedem positiven und bei jedem negativen Auslöseimpulswechsel ein Codefehler entsteht, wobei allerdings der Aufwand wiederum erhöht ist. Wie bei der Fig. 5 ist auch bei der Fig. 7 der Modenausgang M1 der Umcodierlogik UL über das erste Gatter G1 mit dem D-Eingang eines mit dem Worttakt TW2 getakteten D-Flip-Flops verbunden, das als Modenspeicher MS wirkt und dessen nichtinvertierender Ausgang Q mit dem Modeneingang M2 der Umcodierlogik UL verbunden ist. Mit dem Eingang für die Impulse CFE zur Codefehlereinblendung ist ebenfalls der D-Eingang des ersten D-Flip-Flops verbunden, das ebenfalls mit dem Worttakt TW2 getaktet wird, unterschiedlich ist jedoch die weitere Schaltung. Der zweite Eingang des ersten Gatters G1 vom Exklusiv-ODER-Typ ist mit dem Ausgang eines dritten Gatters G3 verbunden, bei dem es sich ebenfalls um ein Exklusiv-ODER-Gatter handelt. Der nichtinvertierende Ausgang Q und der invertierende Ausgang $\bar{Q}$ des ersten Flip-Flops FF1 sind jeweils getrennt mit ersten Eingängen eines vierten und eines fünften Gatters G4, G5 vom UND-Typ verbunden. Der zweite Eingang des vierten Gatters G4 ist an den nichtinvertierenden Ausgang Q des Modenspeichers MS angeschlossen, während an dessen invertierenden Ausgang $\bar{Q}$ der zweite Eingang des fünften Gatters G5 angeschlossen ist. Der Ausgang des vierten Gatters G4 ist mit dem Rücksetzeingang R, und der Ausgang des fünften Gatters G5 ist mit dem Setzeingang S eines dritten Flip-Flops FF3 verbunden, bei dem es sich um ein RS-Flip-Flop handelt. Der nichtinvertierende Ausgang Q dieses Flip-Flops ist mit dem einen Eingang des dritten Gatters und mit dem D-Eingang des zweiten D-Flip-Flops FF2 verbunden, das mit dem Worttakt TW2 getaktet wird und dessen nichtinvertierender Ausgang Q mit dem zweiten Eingang des dritten Gatters G3 verbunden ist.

In der Fig. 8 ist das Impulsdiagramm zur Fig. 7 dargestellt, das wiederum in der obersten Zeile den zweiten Worttakt TW2 und darunter einen Impuls CFE zur Codefehlereinblendung darstellt. Mit der nächsten ansteigenden Taktflanke wird nach dem Beginn des Impulses CFE der nichtinvertierende Ausgang Q des ersten D-Flip-Flops FF1 auf 1 gesetzt. Der Zustand am Ausgang Q des Modenspeichers MS ist zunächst von der Vorgeschichte abhängig, also von den vorausgegangenen Modenzuständen in der Umcodierlogik UL. Dadurch, daß der Modenspeicher MS mit dem zweiten Worttakt TW2 getaktet wird und bei steigender Flanke schaltet, kann sich dessen logischer Zustand nur mit der ansteigenden Flanke des Worttaktes ändern, in diesem Fall wurde eine Taktflanke nach dem Umschalten des ersten D-Flip-Flops FF1 angenommen. Dann schalten sowohl der nichtinvertierende Ausgang Q des Modenspeichers MS und damit der Zustand am Modeneingang der Umcodierlogik als auch über das vierte bzw. das fünfte Gatter G4, G5 das RS-Flip-Flop FF3, so daß dessen nichtinvertierender Ausgang Q auf den Wert logisch 1 geschaltet wird. Eine Taktflanke später schaltet das zweite D-Flip-Flop, dessen D-Eingang an den Q-Ausgang des RS-Flip-Flops angeschlossen ist. Über das dritte Gatter G3 wird der Zustand am Q-Ausgang des zweiten D-Flip-Flops FF2 an das erste Gatter G1 und über dieses an den D-Eingang des Modenspeichers weitergeleitet, so daß dieser eine Taktflanke später umschaltet. In dieser Zeit ergeben sich am Ausgang C2 des Gatters G3 Bereiche MV gestörten Modenwechsels jeweils zwischen dem Umschalten des RS-Flip-Flops und des zweiten D-Flip-Flops liegen. Am Ende des Impulses CFE zur Codefehlereinblendung ergibt sich dabei ein analoges Verhalten, nur in der anderen Richtung, so daß sich auf eine positive Verletzung der laufenden digitalen Summe nach Beginn des Impulses CFE zur Codefehlereinblendung am Ende des Impulses entsprechend eine negative Verletzung der laufenden digitalen Summe ergibt. Bei einer Folge derartiger Impulse zur Codefehlereinblendung ergeben sich abwechselnd positive und negative Verletzungen der laufenden digitalen Summe. Dadurch bleibt der Gleichstrommittelwert des digitalen Signals erhalten. Die Zahl der Codefehler pro Zeiteinheit kann dabei den größten Wert annehmen, ohne daß Verfälschungen der übertragenen digitalen Information entstehen. Bei einer entsprechend hohen Bitrate des zu übertragenden digitalen Signales sowie entsprechend hoher Codefehlerzahl ist es möglich, nicht nur vergleichsweise langsame Telemetriesignale oder andere Datensignale zu übertragen; mittels der beschriebenen Codefehlereinblendung ist es möglich, einen kompletten Sprachkanal zu übertragen, der beispielsweise als Dienstkanal und zur Streckenumschaltung verwendet werden kann.

**Patentansprüche**

1. Codeumsetzer zur Durchführung eines Verfahrens zur Codefehlereinblendung in digitale Übertragungssignale, die vor der Übertragung über eine digitale Strecke in einen redundanten Alphabetcode mit mehreren Moden umgeformt werden, wobei zur Umcodierung wenigstens eines Wortes der Übertragungssignale ein gegenüber dem vorgesehenen Modenzustand veränderter Modenzustand verwendet wird, mit einer, jeweils ein Wort der digitalen Signale umformenden Umcodierlogik, die einen Modenausgang (M1) enthält, an dem ein den Folgemode bezeichnendes Signal ansteht, wobei mit dem Modenausgang (M1) der Eingang eines getakteten Modenspeichers (MS) verbunden ist, an dessen nichtinvertierendem Ausgang (Q) der Modeneingang (M2) der Umcodierlogik (UL) angeschlossen ist und dabei der Modenspeicher (MS) mit einem Eingang für einen Impuls (CFE) zur Codefehlereinblendung verbunden ist, dadurch gekennzeichnet, daß in die Verbindung zwischen Modenausgang (M1) der Umcodierlogik (UL) und D-Eingang des Modenspeichers (MS) ein erstes Gatter (G1) vom Exklusiv-ODER-Typ eingeschaltet ist, dessen einer Eingang mit dem Modenausgang (M1) und dessen zweiter Eingang mit dem Ausgang (C2) eines zweiten Gatters (G2) vom UND-Typ verbunden ist, daß der Eingang für den Impuls (CFE) zur Codefehlereinblendung mit dem D-Eingang eines ersten D-Flip-Flops (FF1) verbunden ist, dessen nichtinvertierender Ausgang (Q) mit dem einen Eingang des zweiten Gatters (G2) sowie mit dem D-Eingang eines zweiten D-Flip-Flops (FF2) verbunden ist, dessen invertierender Ausgang (Q̄) mit dem anderen Eingang des zweiten Gatters (G2) verbunden ist und daß das erste und das zweite D-Flip-Flop (FF1, FF2) mit einer Quelle für den Worttakt (TW2) der abzugebenden digitalen Signale verbunden ist.

2. Codeumsetzer zur Durchführung eines Verfahrens zur Codefehlereinblendung in digitale Übertragungssignale, die vor der Übertragung über eine digitale Strecke in einen redundanten Alphabetcode mit mehreren Moden umgeformt werden, wobei zur Umcodierung wenigstens eines Wortes der Übertragungssignale ein gegenüber dem vorgesehenen Modenzustand veränderter Modenzustand verwendet wird, mit einer, jeweils ein Wort der digitalen Signale umformenden Umcodierlogik, die einen Modenausgang (M1) enthält, an dem ein, den Folgemode bezeichnendes Signal ansteht, wobei mit dem Modenausgang (M1) der Eingang eines getakteten Modenspeichers (MS) verbunden ist, an dessen nichtinvertierendem Ausgang (Q) der Modeneingang (M2) der Umcodierlogik (UL) angeschlossen ist und dabei der Modenspeicher (MS) mit einem Eingang für einen Impuls (CFE) zur Codefehlereinblendung verbunden ist, dadurch gekennzeichnet, daß in die Verbindung zwischen dem Modenausgang (M1) der Umcodierlogik (UL) und dem Eingang des Modenspeichers (MS) ein erstes Gatter (G1) vom Exklusiv-ODER-Typ eingeschaltet ist, dessen einer Eingang mit dem Modenausgang (M1) und dessen anderer Eingang mit dem Ausgang (C2) eines dritten Gatters (G3) vom Exklusiv-ODER-Typ verbunden ist, daß der Eingang für den Impuls (CFE) zur Codefehlereinblendung mit dem D-Eingang des ersten D-Flip-Flops (FF1) verbunden ist, das dessen nichtinvertierender und dessen invertierender Ausgang (Q, Q̄) jeweils getrennt mit den ersten Eingängen eines vierten und eines fünften Gatters (G4, G5) vom UND-Typ verbunden sind, daß der zweite Eingang des vierten Gatters (G4) und dem nichtinvertierenden Ausgang (Q) und der zweite Eingang des fünften Gatters (G5) mit dem invertierenden Ausgang (Q̄) des Modenspeichers (MS) verbunden sind, daß der Ausgang des vierten Gatters mit dem Rücksetzeingang und der Ausgang des fünften Gatters mit dem Setzeingang eines dritten Flip-Flops (FF3) verbunden sind, daß dessen nichtinvertierender Ausgang (Q) mit dem einen Eingang des dritten Gatters (G3) sowie mit dem D-Eingang des zweiten D-Flip-Flops (FF2) verbunden ist, daß der nichtinvertierende Ausgang (Q) des zweiten D-Flip-Flops (FF2) mit dem anderen Eingang des dritten Gatters (G3) verbunden ist und daß das erste und das zweite D-Flip-Flop (FF1, FF2) mit einer Quelle für den Worttakt (TW2) der umcodierten digitalen Signale verbunden ist.

## Claims

1. A code converter for carrying out a method of gating-in a code error into digital transmission signals which, prior to transmission across a digital link, are converted into a redundant alphabet code comprising a plurality of modes, where, for the recoding of at least one word of the transmission signals, a mode status is used which differs from the given mode status, with a recoding logic unit which converts each word of the digital signals and which is provided with a mode output M1 at which a signal occurs which designates the following mode, where the mode output (M1) is connected to the input of a clock-controlled mode store (MS) whose non-inverting output (Q) is connected to the mode input (M2) of the recoding logic unit (UL) and where the mode store (MS) is connected to an input for a pulse (CFE) for gating-in the code error, characterised in that a first gate (G1) of the EXCLUSIVE-OR-type is connected into the link between the mode output (M1) of the recoding logic unit (UL) and the D-input of the mode store (MS), where the first input of said gate is connected to the mode output (M1) and the second input of said gate is connected to the output (C2) of a second gate (G2) of the AND-type, that the input for the pulse (CFE) for the gating-in of the code error is connected to the D-input of a first D-flip-flop (FF1) whose non-inverting output (Q) is connected to the first input of the second gate (G2) and to the D-input of a second D-flip-flop (FF2) whose inverting input (Q̄) is connected to the other input of the second gate (G2), and that the first and second D-flip-flops (FF1, FF2) are connected to a source for the word clock signal (TW2) of the digital signals which are to be emitted.

2. A code converter for carrying out a method for gating-in a code error into digital transmission signals which, prior to transmission across a digital link, are converted into a redundant alphabet code comprising a plurality of modes, where, for the recoding of at least one word of the transmission signals, a mode state is used which differs from the given mode state, with a recoding logic unit which converts each word of the digital signals and which is provided with a mode output (M1) at which a signal occurs which designates the following mode, where the mode output (M1) is connected to the input of a clock-controlled mode store (MS) whose non-inverting output (Q) is connected to the mode input (M2) of the recoding logic unit (UL), and where the mode store (MS) is connected to an input for a pulse (CFE) for the gating-in of the code error, characterised in that a first gate (G1) of the EXCLUSIVE-OR-type is connected into the link between the mode output (M1) of the recoding logic unit (UL) and the input of the mode store (MS), where the first input of said gate is connected to the mode output (M1) and the other input of said gate is connected to the output (C2) of a third gate (G3) of the EXCLUSIVE-OR-type, that the input for the pulse (CFE) for the gating-in of a code error is connected to the D-input of the first D-flip-flop (FF1), that the non-inverting output (Q) and the inverting output (Q̄) of said D-flip-flop are each separately connected to the first inputs of a fourth and fifth gate (G4, G5) of the AND-type, that the second input of the fourth gate (G4) is connected to the non-inverting output (Q) and the second input of the fifth gate (G5) is connected to the inverting output (Q̄) of the mode store (MS), that the output of the fourth gate is connected to the resetting input of a third flip-flop (FF3) and the output of the fifth gate is connected to the setting input thereof, that the non-inverting output (Q) of said third flip-flop is connected to the first input of the third gate (G3) and to the D-input of the second D-flip-flop (FF2), that the non-inverting output (Q) of the second D-flip-flop (FF2) is connected to the other input of the third gate (G3), and that the first and second D-flip-flops (FF1, FF2) are connected to a source for the word clock signal (TW2) of the recoded digital signals.

## Revendications

1. Convertisseur de code pour la mise en œuvre d'un procédé pour introduire des erreurs de code dans des signaux numériques de transmission, qui ont été convertis, avant leur transmission au moyen d'une section numérique, en un code alphabétique redondant comportant plusieurs modes, et dans lequel pour le transcodage d'au moins un mot des signaux de transmission, on utilise un état de mode modifié par rapport à l'état de mode prévu, et comportant une logique de transcodage convertissant respectivement un mot des signaux numériques et contenant une sortie de modes (M1), sur laquelle apparaît un signal désignant le mode suivant, et dans lequel la sortie de modes (M1) est reliée à l'entrée d'une mémoire de modes (MS) commandée de façon cadencée et à la sortie non inverseuse Q de laquelle se trouve raccordée l'entrée de modes (M2) de la logique de transcodage (UL), et la mémoire de modes (MS) est reliée à une entrée prévue pour une impulsion (CFE) pour l'introduction d'une erreur de code, caractérisé par le fait que dans la liaison entre la sortie de mode (ME) de la logique de transcodage (UL) et l'entrée D de la mémoire de modes (MS) se trouve branchée une première porte (G) du type OU-Exclusif, dont une entrée est reliée à la sortie de modes (M) et dont la seconde entrée est reliée à la sortie (C2) d'une seconde porte (G2) du type ET, que l'entrée pour l'impulsion (CFE) utilisée pour l'introduction d'une erreur de code est reliée à l'entrée D d'une première bascule bistable de type D (FF1), dont la sortie non inverseuse Q est reliée à une entrée de la seconde porte (G2) ainsi qu'à l'entrée D d'une seconde bascule bistable de type D (FF2), dont la sortie inverseuse (Q̄) est reliée à l'autre entrée de la seconde porte (G2), et que les première et seconde bascules bistables de type D (FF1, FF2) sont reliées à une source délivrant la cadence de mots (TW2) des signaux numériques devant être délivrés.

2. Convertisseur de code pour la mise en œuvre d'un procédé pour introduire des erreurs de code dans des signaux numériques de transmission, qui ont été convertis, avant leur transmission au moyen d'une section numérique, en un code alphabétique redondant comportant plusieurs modes, et dans lequel pour le transcodage d'au moins un mot de signaux de transmission, on utilise un état de mode modifié par rapport à l'état de mode prévu, et comportant une logique de transcodage convertissant respectivement un mot des signaux numériques et contenant une sortie de mode (M1), sur laquelle apparaît un signal désignant le mode suivant, et dans lequel la sortie de modes (M1) est reliée à l'entrée d'une mémoire de modes (MS) commandée de façon cadencée et à la sortie non inverseuse Q de laquelle se trouve raccordée l'entrée de modes (M2) de la logique de transcodage (UL), et la mémoire de modes (MS) est reliée à une entrée prévue pour une impulsion (CFE) pour l'introduction d'une erreur de code, caractérisé par le fait que dans la liaison entre la sortie de modes (M1) de la logique de transcodage (UL) et l'entrée de la mémoire de modes (MS) se trouve branchée une première porte (G) du type OU-Exclusif, dont une entrée est reliée à la sortie de mode (M1) et dont l'autre entrée est reliée à la sortie (C2) d'une troisième porte (G3) du type OU-Exclusif, que l'entrée pour l'impulsion (CFE) utilisée pour introduire une erreur de code est reliée à l'entrée D de la première bascule bistable de type D (FF1), que la sortie non inverseuse et la sortie inverseuse (Q, Q̄) de cette bascule bistable sont reliées respectivement séparément aux premières entrées d'une quatrième et d'une cinquième portes (G4, G5) du type ET, que la seconde entrée de la quatrième porte (G4) est reliée à la sortie non inverseuse (Q) et la seconde entrée de la cinquième porte (G5) est reliée à la sortie inverseuse (Q̄) de la mémoire de modes (MS), que la sortie de la quatrième porte est reliée à l'entrée de remise à l'état initial de la sortie et la cinquième porte est reliée à l'entrée de positionnement d'une troisième bascule bistable (FF), que la sortie non inverseuse (Q) de cette dernière est reliée à une entrée de la troisième porte (G3) ainsi qu'à l'entrée D de la seconde bascule bistable de type D (FF2), que la sortie non inverseuse (Q) de la seconde bascule bistable de type D (FF2) est reliée à l'autre entrée de la troisième porte (G3) et que les première et seconde bascules bistables de type D (FF1, FF2) sont reliées à une source pour la cadence de mots (TW2) des signaux numériques transcodés.

# FIG 1

# FIG 2

9

# FIG 3

# FIG 4

# FIG 5

# FIG 6

# FIG 7

FF 3

$R = 0$
$S = 1$ } $Q = 0$

$R = 1$
$S = 0$ } $Q = 1$

# FIG 8